# FASCICULE DE BREVET EUROPEEN

(11) **EP 0 699 855 B1**
(45) Date de publication et mention de la délivrance du brevet: **10.06.1998**
(21) Numéro de dépôt: 95401913.9
(22) Date de dépôt: 18.08.1995
(51) Int. Cl.: F16H 63/30, F16H 3/38

(54) **Dispositif perfectionné de commande d'une boîte de vitesses de véhicule automobile**
Schaltungseinrichtung für das Stufengetriebe eines Kraftfahrzeugs
Control device for an automotive gearbox

(30) Priorité: 31.08.1994 FR 9410484
(43) Date de publication de la demande: 06.03.1996
(73) Titulaire: AUTOMOBILES PEUGEOT, 75116 Paris (FR); AUTOMOBILES CITROEN, 92200 Neuilly-sur-Seine (FR)
(72) Inventeur: Fouillet, Serge, F-70400 Hericourt (FR)
(74) Mandataire: Moncheny, Michel

(56) Documents cités:
- EP-A- 0 501 845
- DE-A- 4 320 224
- FR-A- 2 702 263
- GB-A- 2 174 465

## Description

La présente invention concerne un dispositif perfectionné de commande d'une boîte de vitesses de véhicule automobile.

Certaines conceptions de boîtes de vitesses compactes ne permettent pas de loger un synchroniseur du pignon de marche arrière. Il demeure toutefois nécessaire de prévoir un agencement permettant d'éviter le phénomène de craquement lors de l'engagement de la marche arrière à l'arrêt du véhicule.

Dans ces circonstances, toutes les pièces liées en rotation à l'arbre secondaire de la boîte de vitesses sont immobiles et il est alors nécessaire de ralentir celles qui sont liées à l'arbre primaire pour éviter le phénomène de craquement.

Dans la mesure où les différents pignons correspondant aux rapports de marche avant sont équipés de synchroniseurs, la solution la plus logique pour la conception d'un tel agencement consiste, préalablement à l'engagement du rapport de marche arrière, à actionner un des synchroniseurs de marche avant, et de préférence le synchroniseur associé au rapport de rang le plus élevé qui a une inertie plus faible.

Selon la conception la plus courante et la plus simple pour la grille de commande d'une boîte à cinq rapports de marche avant et un rapport de marche arrière, dite à trois lignes, dans laquelle la cinquième vitesse et la marche arrière sont disposées aux extrémités opposées d'une même ligne, il faut garantir que, lors de l'engagement de la marche arrière, le synchroniseur de cinquième vitesse soit dans un premier temps actionné pour ralentir l'arbre primaire, puis dégagé dans un deuxième temps. En effet, le ralentissement de l'arbre primaire doit être libéré avant la mise en contact des dentures pour permettre une mise en coïncidence des dents afin de ne pas gêner la phase finale d'engagement.

Il est souhaitable d'utiliser le mouvement de passage de la marche arrière, et non pas le mouvement de sélection qui pénaliserait le passage de quatrième en cinquième vitesse dans une grille à trois lignes, pour provoquer l'engagement du cône de friction du synchroniseur associé au rapport opposé à la marche arrière, puis le dégager avant la venue en contact des dentures.

Afin de résoudre ces problèmes, il a été proposé dans le document FR-A-2 673 254 (≙ EP-A-501845) un dispositif de commande d'une boîte de vitesses de véhicule automobile, du type comportant un organe de commande mobile en translation axiale et en rotation autour de son axe perpendiculaire aux arbres primaire et secondaire de la boîte de vitesses pour provoquer, à partir d'une position axiale déterminée de sélection, par rotation dans un premier sens l'engagement sans synchroniseur du rapport de marche arrière par coopération de l'extrémité du doigt de commande de marche arrière avec une crosse de marche arrière formée à l'extrémité d'un basculeur qui pivote autour d'un axe fixe perpendiculaire aux arbre primaire et secondaire, et du type comportant des moyens pour freiner les pignons de la boîte de vitesses préalablement à l'engagement du rapport de marche arrière par coopération des organes d'engagement de ce rapport de marche arrière avec des éléments d'actionnement d'un synchroniseur associé à l'un des rapports de marche avant de la boîte de vitesses, du type dans lequel lesdits éléments d'actionnement du synchroniseur, comprenant une fourchette de commande de synchroniseur liée en translation axiale a un axe de commande parallèle aux arbres primaire et secondaire, comportent un bras d'entraînement de l'axe de commande de fourchette lié en translation à ce dernier et dont une extrémité coopère par des moyens escamotables avec le basculeur de marche arrière, l'engagement de la marche arrière par pivotement du basculeur provoquant, lors de la phase initiale, l'actionnement du synchroniseur par lesdits éléments d'actionnement dont l'axe de commande est alors déplacé en translation axiale selon un premier sens D1, puis provoquant, lors de la phase suivante, le dégagement du synchroniseur par déplacement en translation axiale selon son second sens D2 dudit axe de commande du fait de l'escamotage desdits moyens escamotables.

Toutefois, le mode de réalisation des moyens escamotables sous la forme d'une bille qui coopère avec une rampe liée au basculeur est complexe à réaliser et à mettre en oeuvre avec précision.

Afin de remédier à cet inconvénient, la présente invention propose un dispositif de commande du type de celui décrit et représenté dans le document FR-A-2 673 254, caractérisé en ce que lesdits moyens escamotables comportent un levier qui est monté pivotant sur le bras d'entraînement autour d'un axe parallèle à l'axe de pivotement du basculeur et qui comporte un premier bras qui coopère avec un point de réaction fixe contre lequel il est sollicité élastiquement en appui et un second bras qui est susceptible de coopérer avec une surface d'entraînement formée sur le basculeur, de manière que le pivotement du basculeur pour l'engagement de la marche arrière provoque la venue en contact de l'extrémité du second bras du levier avec ladite surface d'entraînement puis la sollicitation du bras d'entraînement par le second bras du levier pour provoquer le déplacement de l'axe de commande dans ledit premier sens, puis le dégagement de l'extrémité du second bras du levier pour autoriser, lors de ladite phase suivante, le dégagement du synchroniseur par déplacement dudit axe de commande dans ledit second sens.

Selon d'autres caractéristiques de l'invention :
- ladite surface d'entraînement est formée sur un bord latéral du basculeur, sur son extrémité opposée à la crosse ;
- le levier est porté par l'extrémité libre du bras d'entraînement ;
- l'axe de pivotement du basculeur est perpendiculaire à l'axe de l'organe de commande ;
- l'extrémité du doigt de commande de marche arrière est reçue dans une crosse formée au voisinage d'une extrémité du basculeur et l'axe de pivotement du basculeur est disposé entre cette crosse et la surface d'entraînement.

D'autres caractéristiques et avantages de l'invention apparaîtront à la lecture de la description détaillée qui va suivre pour la compréhension de laquelle on se rapportera aux dessins annexés dans lesquels :
- la figure 1 est une vue en coupe partielle en plan du dispositif de commande d'une boîte de vitesses réalisé conformément aux enseignements de l'invention;
- la figure 2 est une vue simplifiée de dessus du bras d'entraînement, du basculeur de marche arrière et du synchroniseur d'un cinquième rapport de marche avant ; et
- les figures 3 à 6 sont des schémas permettant d'illustrer le mode de fonctionnement du dispositif de commande réalisé conformément aux enseignements de l'invention dans ses différentes positions fonctionnelles.

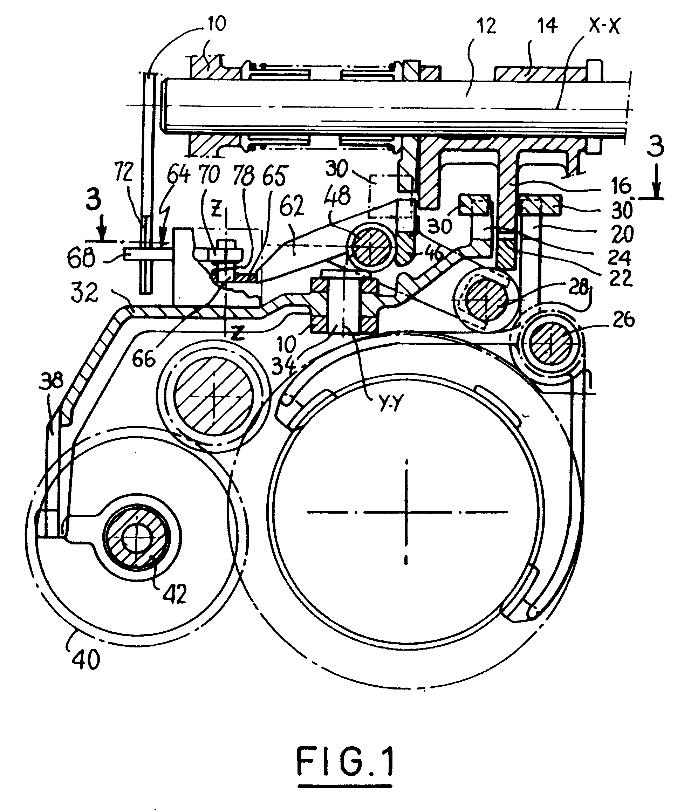

On reconnaît à la figure 1 une partie d'une boîte de vitesses dans le carter 10 dans laquelle est monté coulissant un organe de commande 12 qui est monté mobile en translation parallèlement à son axe X-X ainsi qu'en rotation autour de ce même axe.

L'organe de commande 12 reçoit une pièce de commande 14 qui lui est liée en translation et en rotation.

La pièce de commande 14 comporte au moins un doigt de commande 16.

Ce doigt de commande 16, en fonction de la position axiale occupée par l'organe de commande 12, est susceptible d'être reçu dans une crosse 20 de commande des premier et deuxième rapports de marche avant, dans une crosse 22 de commande des troisième et quatrième rapports de marche avant, c'est-à-dire dans la position dans laquelle il est illustré à la figure 1, ou enfin dans une crosse 24 de commande de la marche arrière.

Les crosses 20 et 22 sont respectivement associées aux axes coulissants 26 et 28 qui portent les fourchettes de commande des rapports de marche avant correspondants. Les axes 26 et 28 sont perpendiculaires à l'axe X-X.

On reconnaît également sur la figure 1 les pavés 30 d'une ancre de verrouillage de conception classique.

La crosse de marche arrière 24 est formée à une extrémité libre d'un basculeur 32 de commande de la marche arrière qui est monté pivotant au moyen d'un axe 34 autour d'un axe géométrique Y-Y qui est perpendiculaire à l'axe X-X, ainsi qu'aux axes des arbres primaire et secondaire de la boîte de vitesses.

L'extrémité du basculeur 32 opposée à la crosse 24 comporte une fourchette 38 qui agit directement sur le baladeur 40 de marche arrière monté sur son axe 42.

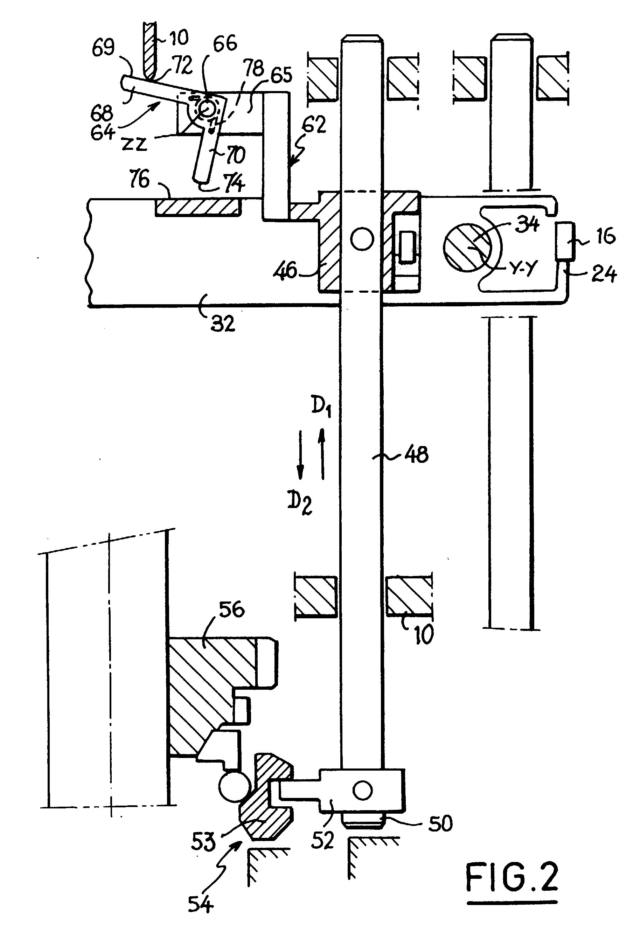

Une pièce 46, destinée à commander de façon connue en soi le cinquième rapport de marche avant, également appelée noix de cinquième, est liée en translation et en rotation à un axe 48 monté coulissant dans le carter 10. Comme on peut le voir sur la figure 2, l'axe 48 porte, à son extrémité libre 50, la fourchette 52 qui agit sur le manchon 53 du synchroniseur 54 du pignon 56 du cinquième rapport de marche avant.

L'axe 48 est parallèle aux arbres primaire et secondaire et est perpendiculaire à l'organe de commande 12 et à l'axe Y-Y de pivotement du basculeur 32.

La noix 46 comporte un prolongement 62 qui constitue le bras d'entraînement de l'axe 48 par l'intermédiaire du basculeur 32.

A cet effet, 1' extrémité libre 65 du bras d'entraînement 62 reçoit un levier 64 qui est monté pivotant sur ce bras 62 autour d'un axe 66 de manière à être monté pivotant autour d'un axe géométrique Z-Z qui est parallèle à l'axe Y-Y de pivotement du basculeur 32.

Le levier 64 comporte un premier bras 68 et un second bras 70 (voir notamment figure 2).

Le premier bras 68 coopère, par sa face latérale 69 avec un point fixe 72 lié au carter de la boîte de vitesses qui constitue un point d'appui et de réaction comme cela sera expliqué par la suite.

L'extrémité 74 du second bras 70 du levier 64, qui forme sensiblement un angle droit avec le premier bras 68, est prévue pour coopérer avec une surface d'entraînement 76 formée sur un bord latéral du basculeur 32, sur son extrémité opposée à la crosse 24.

On notera que l'axe d'articulation 34 du basculeur 32 est disposé entre sa crosse 24 et la surface d'entraînement 76.

Le levier 64 est sollicité élastiquement en rotation, par un ressort de rappel 78, autour de son axe 66 de manière à maintenir en permanence la surface de réaction 69 formée sur le premier bras 68 en contact avec le point fixe de réaction 72, c'est-à-dire en sollicitant le levier 64 dans le sens horaire en considérant la figure 2.

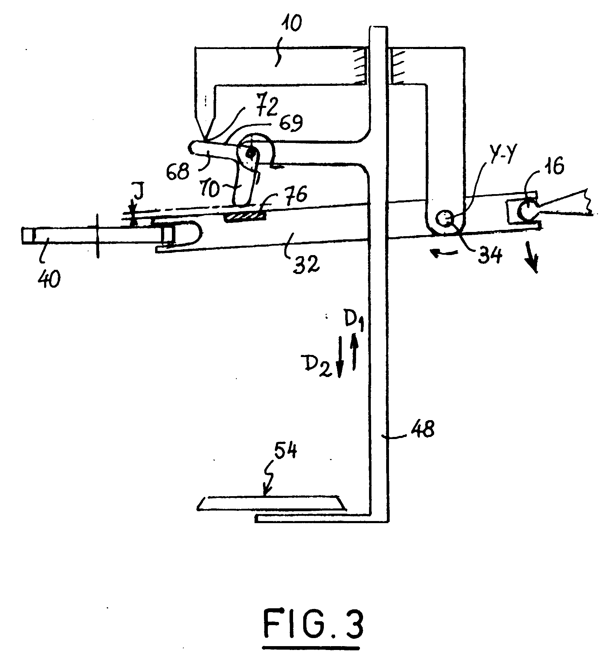

Lorsque la boîte de vitesses est au point mort en position de sélection de la marche arrière ou du cinquième rapport de marche avant, c'est-à-dire dans la position illustrée aux figures 2 et 3, l'extrémité 74 du second bras 70 est en vis-à-vis de la surface d'entraînement 76 mais n'est pas en contact avec cette dernière et il existe entre elles un jeu "j" (voir figure 3) qui permet le retour au point mort du dispositif lors de la phase de dégagement de la marche arrière.

Dans la position illustrée aux figures 2 et 3, la fourchette 52 n'exerce aucun effort axial sur le manchon 53 du synchroniseur 54.

On décrira maintenant les phases successives correspondant au passage de la marche arrière.

Pour la première phase d'engagement du rapport de marche arrière, le conducteur transmet un mouvement de passage au moyen de l'organe de commande 12 qui provoque la rotation simultanée du doigt de commande 16 dans le sens anti-horaire en considérant la figure 3.

Cette rotation a premièrement pour effet d'amener l'extrémité du doigt de commande 16 en appui contre la face en vis-à-vis de la crosse 24 du basculeur de marche arrière 32 pour provoquer un pivotement de ce dernier autour de son axe Y-Y dans le sens horaire en considérant la figure 3.

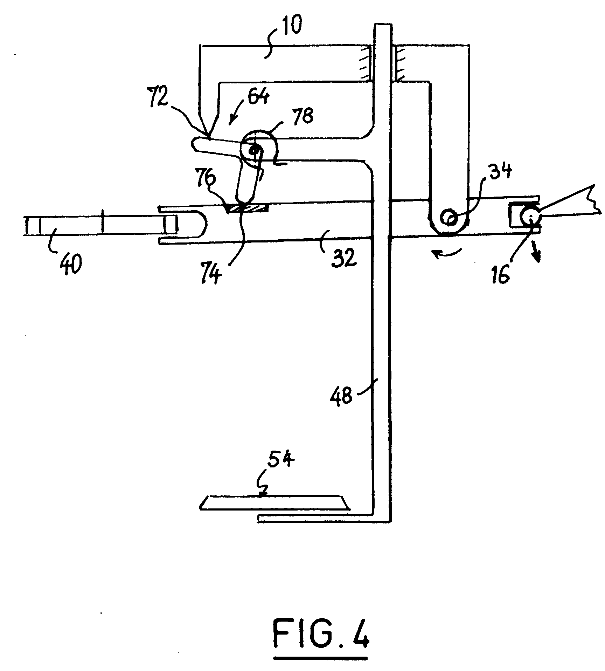

Le pivotement du basculeur 32 déplace la surface d'entraînement 76 formée sur le basculeur 32 jusqu'à ce que cette surface 76 vienne en contact avec l'extrémité libre 74 du second bras 70 du levier 64, la face de réaction 69 étant maintenue en appui contre le point de réaction 72 par le ressort de rappel 78. La position atteinte est schématisée à la figure 4.

En continuant le mouvement de passage de la marche arrière, et donc la rotation du basculeur 32 autour de son axe Y-Y, le conducteur provoque le déplacement de l'axe 66 du levier 64 porté par le bras d'entraînement 62, ce qui a pour effet de provoquer l'entraînement de l'axe d'entraînement 48 dans la première direction D1 du fait de l'effort d'entraînement appliqué par la surface d'entraînement 76 sur l'extrémité 74 du second bras 70 du levier 64.

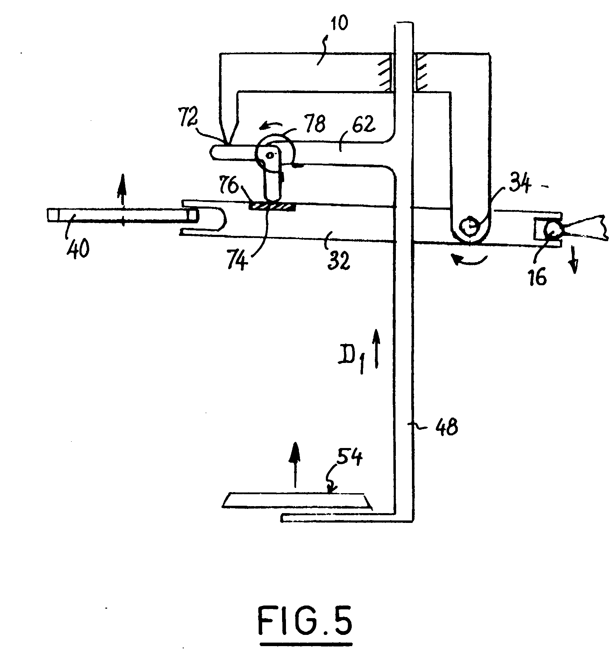

Lors de cette phase de l'engagement de la marche arrière, schématisée à la figure 5, l'entraînement de l'axe 48 est transmis par celui-ci à la fourchette 52, et donc au manchon 53 du synchroniseur 54. Cette action a pour effet d'amener le cône de friction du synchroniseur en contact, et donc de provoquer un freinage, ou ralentissement, de l'arbre primaire de la boîte de vitesses.

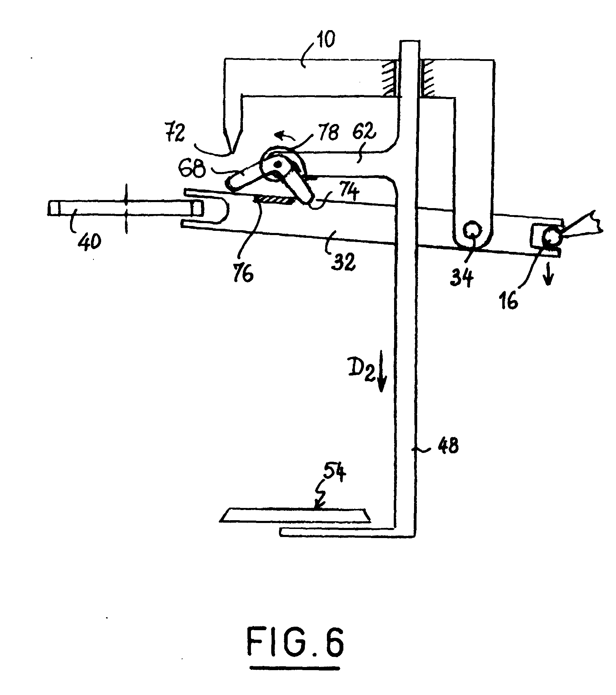

Le pivotement du basculeur 32 autour de son axe Y-Y se poursuit ce qui a pour effet, comme cela est schématisé sur la figure 6, de provoquer l'échappement de l'extrémité 74 du second bras 70 du levier 64 qui dépasse une extrémité longitudinale de la surface d'entraînement 76.

Le déplacement du bras d'entraînement 62 et de l'axe 48, selon la direction D1, s'interrompt alors immédiatement. Au même moment, l'ensemble constitué par la noix 46, le bras d'entraînement 62, l'axe d'entraînement coulissant 48 et la fourchette 52, se déplace selon la direction D2 indiquée à la figure 6, à l'aide de moyens connus tels que décrits par exemple dans FR-A-2 673 254.

Le déplacement selon la direction D2 tend donc à dégager le cône de friction du synchroniseur 54, l'extrémité libre 74 du second bras 70 du levier 64 étant, au cours de cette phase, reçue librement entre la surface d'entraînement 76 et l'axe 34 d'articulation du basculeur 32.

La phase d'utilisation du synchroniseur 54 étant terminée et les pignons ayant été freinés, voire arrêtés, le conducteur peut provoquer le passage complet du rapport de marche arrière avec engagement des pignons correspondants sans provoquer aucun craquement.

Lors du dégagement de la marche arrière, la surface d'entraînement 76 n'a aucune action sur le levier 64, et donc sur le synchroniseur 54. Le second bras 70 de ce levier accomplit seulement un trajet lui permettant, sous l'action du ressort 78, de retrouver sa position initiale illustrée aux figures 2 et 3, lors du pivotement du basculeur 32 dans le sens anti-horaire en considérant les figures 2 à 6. Cette absence d'interférence est garantie par l'existence du jeu "j".

## Revendications

1. Dispositif de commande d'une boîte de vitesses de véhicule automobile, du type comportant un organe de commande (12) mobile en translation axiale et en rotation autour de son axe perpendiculaire aux arbres primaire et secondaire de la boîte de vitesses pour provoquer, à partir d'une position axiale déterminée de sélection, par rotation dans un premier sens l'engagement sans synchroniseur du rapport de marche arrière par coopération du doigt de commande de marche arrière avec une crosse de marche arrière (24) formée à l'extrémité, d'un basculeur (32) qui pivote autour d'un axe fixe géométrique (Y-Y) perpendiculaire aux arbres primaire et secondaire, et du type comportant des moyens pour freiner les pignons de la boîte de vitesses préalablement à l'engagement du rapport de marche arrière par coopération des organes d'engagement de ce rapport de marche arrière avec des éléments d'actionnement d'un synchroniseur associé à l'un des rapports de marche avant de la boîte de vitesses, du type dans lequel lesdits éléments d'actionnement du synchroniseur, comprenant une fourchette (52) de commande du synchroniseur (54) liée en translation axiale à un axe de commande (48) parallèle aux arbres primaire et secondaire, comportent un bras d'entraînement (62) de l'axe (48) de commande de fourchette (52) lié en translation à ce dernier et dont une extrémité coopère par des moyens escamotables (64) avec le basculeur de marche arrière (32), l'engagement de la marche arrière par pivotement du basculeur (32) provoquant, lors de la phase initiale, l'actionnement du synchroniseur (54) par lesdits éléments d'actionnement (62,64) dont l'axe de commande (48) est alors déplacé en translation axiale selon un premier sens, puis provoquant, lors de la phase suivante, le dégagement du synchroniseur par déplacement en translation axiale selon son second sens dudit axe de commande (48) du fait de l'escamotage desdits moyens escamotables, caractérisé en ce que lesdits moyens escamotables comportent un levier (64) qui est monté pivotant sur le bras d'entraînement (62) autour d'un axe géométrique (Z-Z) parallèle à l'axe géométrique (Y-Y) de pivotement du basculeur (32) et qui comporte un premier bras (68) qui coopère avec un point de réaction fixe (72) contre lequel il est sollicité élastiquement en appui et un second bras (70) qui est susceptible de coopérer avec une surface d'entraînement (76) formée sur le basculeur (32), de manière que le pivotement du basculeur (32) pour l'engagement de la marche arrière provoque la venue en contact de l'extrémité (74) du second bras (70) du levier (64) avec ladite surface d'entraînement (76), puis la sollicitation du bras d'entraînement (62) par le second bras (70) du levier (64) pour provoquer le déplacement de l'axe de commande (48) dans ledit premier sens, puis le dégagement de l'extrémité (74) du second bras (70) du levier (64) pour autoriser, lors de ladite phase suivante, le dégagement du synchroniseur (54) par déplacement dudit axe de commande (48) dans ledit second sens.

2. Dispositif de commande selon la revendication 1, caractérisé en ce que ladite surface d'entraînement (76) est formée sur un bord latéral du basculeur (32), sur son extrémité opposée à la crosse (24).

3. Dispositif de commande selon la revendication 1 ou 2, caractérisé en ce que le levier (64) est porté par l'extrémité libre (65) du bras d'entraînement (62).

4. Dispositif de commande selon l'une quelconque des revendications précédentes, caractérisé en ce que l'axe géométrique (Y-Y) de pivotement du basculeur (32) est perpendiculaire à l'axe de l'organe de commande (12).

5. Dispositif de commande selon l'une quelconque des revendications précédentes, caractérisé en ce que l'extrémité du doigt (16) de commande de marche arrière est reçue dans ladite crosse (24) formée au voisinage d'une extrémité du basculeur (32), et en ce que l'axe de pivotement (34) du basculeur est disposé entre cette crosse et la surface d'entraînement (76).

## Patentansprüche

1. Schaltvorrichtung für ein Kraftfahrzeuggetriebe einer Art mit einer Schaltkomponente (12), die axial verschieblich und um ihre Achse senkrecht zur Primär- und Sekundärwelle des Getriebes drehbar ist, um ausgehend von einer bestimmten axialen Auswahlstellung durch Drehung in einer ersten Richtung ohne Synchronisiereinrichtung das Einrücken des Rückwärtsgangs durch Zusammenwirken des Rückwärtsgangschaltfingers mit einem Rückwärtsgangkreuzkopf (24) zu bewirken, der am Ende eines Kippers (32) ausgebildet ist, der um eine feste geometrische Achse (Y-Y) senkrecht zur Primär- und Sekundärwelle schwenkt, und einer Art mit Mitteln zum Abbremsen der Ritzel des Getriebes vor dem Einrükken des Rückwärtsgangs durch Zusammenwirken von Einrückkomponenten für diesen Rückwärtsgang mit Betätigungselementen eine Synchronisiereinrichtung, die einem der Vorwärtsgänge des Getriebes zugeordnet ist, einer Art, bei welcher die Betätigungselemente der Synchronisiereinrichtung, die eine Schaltgabel (52) der Synchronisiereinrichtung (54), die axial verschieblich mit einer zur Primär- und Sekundärwelle parallelen Schaltachse (48) verbunden ist, umfassen, einen Arm (62) zur Mitnahme der Schaltachse (48) der Gabel (52), der verschieblich mit letzterer verbunden ist und dessen Ende über zurückziehbare Mittel (64) mit dem Rückwärtsgangkipper (32) zusammenwirkt, aufweisen, wobei das Einrücken des Rückwärtsgangs durch Schwenken des Kippers (32) in der Anfangsphase die Betätigung der Synchronisiereinrichtung (54) durch die Betätigungselemente (62, 64) bewirkt, deren Schaltachse dann axial in einer ersten Richtung verschoben wird, dann, in der darauffolgenden Phase, bewirkt, daß die Synchronisiereinrichtung durch Axialverschiebung der Schaltachse (48) in ihrer zweiten Richtung durch das Zurückziehen der zurückziehbaren Mittel gelöst wird, dadurch gekennzeichnet, daß die zurückziehbaren Mittel einen Hebel (64) aufweisen, der an dem Mitnahmearm (62) um eine parallel zur geometrischen Achse (Y-Y) der Schwenkung des Kippers (32) parallele geometrische Achse (Z-Z) schwenkbar angebracht ist und einen ersten Arm (68), der mit einem festen Reaktionspunkt (72) zusammenwirkt, gegen den er elastisch in Anlage belastet ist, und einen zweiten Arm (70), der mit einer an dem Kipper (32) ausgebildeten Mitnahmefläche (76) zusammenwirken kann, aufweist, derart, daß die Schwenkung des Kippers (32) für das Einrücken des Rückwärtsgangs das Inberührungkommen des Endes (74) des zweiten Arms (70) des Hebels (64) mit der Mitnahmefläche (76), dann die Belastung des Mitnahmearms (62) durch den zweiten Arm (70) des Hebels (64) zur Bewirkung der Versetzung der Schaltachse (48) in der ersten Richtung, dann das Lösen des Endes (74) des zweiten Arms (70) des Hebels (64), um in der nachfolgenden Phase die Freigabe der Synchronisiereinrichtung (54) durch Verschiebung der Schaltachse (48) in der zweiten Richtung zu gestatten, bewirkt.

2. Schaltvorrichtung nach Anspruch 1, dadurch gekennzeichnet, daß die Mitnahmefläche (76) an einem Seitenrand des Kippers (32) an seinem zum Keuzkopf (24) entgegengesetzten Ende ausgebildet ist.

3. Schaltvorrichtung nach Anspruch 1 oder 2, dadurch gekennzeichnet, daß der Hebel (64) auf dem freien Ende (65) des Mitnahmearms (62) sitzt.

4. Schaltvorrichtung nach irgendeinem der vorstehenden Ansprüche, dadurch gekennzeichnet, daß die geometrische Schwenkachse (Y-Y) des Kippers (32) senkrecht zur Achse der Schaltkomponente (12) ist.

5. Schaltvorrichtung nach irgendeinem der vorstehenden Ansprüche, dadurch gekennzeichnet, daß das Ende des Schaltfingers (16) für den Rückwärtsgang in dem im Bereich eines Endes des Kippers (32) ausgebildeten Kreuzkopf (24) aufgenommen ist, und daß die Schwenkachse (34) des Kippers zwischen diesem Kreuzkopf und der Mitnahmefläche (76) angeordnet ist.

## Claims

1. Control device for a gearbox of a motor vehicle, of the type comprising a control member (12) which is mobile in axial translation and in rotation about its axis perpendicular to the primary and secondary shafts of the gearbox in order to provoke, starting from a predetermined axial selection position, by rotation in a first direction the engagement, without synchroniser, of the reverse drive ratio by cooperation of the reverse drive control finger with a reverse drive crook (24) formed at the end of a rocker arm (32) which pivots about a fixed geometric axis (Y-Y) perpendicular to the primary and secondary shafts, and of the type comprising means of braking the pinions of the gearbox prior to the engagement of the reverse drive ratio by cooperation of the members for the engagement of this reverse drive ratio with elements for actuating a synchroniser associated with one of the forward drive ratios of the gearbox, of the type in which the said elements for actuating the synchroniser, comprising a fork (52) for controlling the synchroniser (54) bound in axial translation with a control spindle (48) parallel with the primary and secondary shafts, comprising a drive arm (62) of the spindle (48) for controlling a fork (52) bound in translation with the latter and of which one end cooperates by retractable means (64) with the reverse drive rocker arm (32), the engagement of reverse drive by the pivoting of the rocker arm (32) causing, during the initial phase, the actuation of the synchroniser (54) by the said actuating elements (62, 64) whose control spindle (48) is then displaced in axial translation in a first direction, then causing, during the following phase, the disengagement of the synchroniser by the displacement in axial translation in a second direction of the said control spindle (48) because of the retraction of the said retractable means, characterised in that the said retractable means comprise a lever (64) which is mounted in a pivoting manner on the drive arm (62) about a geometric axis (Z-Z) parallel with the geometric axis (Y-Y) of pivoting of the rocker arm (32) and which comprises a first arm (68) which cooperates with a fixed reaction point (72) against which it bears elastically and a second arm (70) which is capable of cooperating with a drive surface (76) formed on the rocker arm (32) such that the pivoting of the rocker arm (32) for the engagement of the reverse drive causes the coming into contact of the end (74) of the second arm (70) of the lever (64) with the said drive surface (76), then the application of force to the drive arm (62) by the second arm (70) of the lever (64) to provoke the displacement of the control spindle (48) in the said first direction, then the disengagement of the end (74) of the second arm (70) of the lever (64) to enable, during the said following phase, the disengagement of the synchroniser (54) by displacement of the said control spindle (48) in the said second direction.

2. Control device according to Claim 1, characterised in that the said drive surface (76) is formed on a lateral edge of the rocker arm (32) on its end opposite that of the crook (24).

3. Control device according to Claim 1 or 2, characterised in that the lever (64) is carried by the free end (65) of the drive arm (62).

4. Control device according to any one of the preceding claims, characterised in that the geometric axis (Y-Y) of pivoting of the rocker arm (32) is perpendicular to the axis of the control member (12).

5. Control device according to any one of the preceding claims, characterised in that the end of the reverse drive control finger (16) is received in the said crook (24) formed in the vicinity of an end of the rocker arm (32), and in that the axis of pivoting (34) of the rocker arm is disposed between this crook and the drive surface (76).
